# EUROPÄISCHE PATENTSCHRIFT

(11) **EP 3 857 691 B1**
(45) Veröffentlichungstag und Bekanntmachung des Hinweises auf die Patenterteilung: **08.02.2023**
(21) Anmeldenummer: 18815548.5
(22) Anmeldetag: 27.11.2018
(51) Int. Cl.: H02M 3/155, H02M 3/335, H02M 7/483, H02J 3/36

(54) **EINRICHTUNG ZUM ÜBERSETZEN EINER GLEICHSPANNUNG**
DEVICE FOR TRANSFORMING A DIRECT CURRENT VOLTAGE
DISPOSITIF DE CONVERSION D'UNE TENSION CONTINUE

(43) Veröffentlichungstag der Anmeldung: 04.08.2021
(73) Patentinhaber: Siemens Energy Global GmbH & Co. KG, 81739 München (DE)
(72) Erfinder: KAMMERER, Felix, 91058 Erlangen (DE); PIESCHEL, Martin, 90473 Nürnberg (DE)
(86) Internationale Anmeldenummer: PCT/EP2018/082704
(87) Internationale Veröffentlichungsnummer: WO 2020/108739

(56) Entgegenhaltungen:
- EP-A1- 2 637 296
- WO-A1-2014/056540
- WO-A1-2014/071598
- HEATHCOTE M J ED - FRANKLIN A C ET AL: "The J & P transformer book : a practical technology of the power transformer , Scott- and le blanc-connected transformers", 31. Dezember 1998 (1998-12-31), THE J & P TRANSFORMER BOOK : A PRACTICAL TECHNOLOGY OF THE POWER TRANSFORMER, NEWNES, GB, PAGE(S) 729 - 735, XP002571975, ISBN: 978-0-7506-1158-9 das ganze Dokument
- Stefan Milovanovi ET AL: "MMC-based High Power DC-DC Converter Employing Scott Transformer", , 5. Juni 2018 (2018-06-05), XP055565499, Gefunden im Internet: URL:https://ieeexplore.ieee.org/ielx7/8402 798/8402799/08402846.pdf?tp=&arnumber=8402 846&isnumber=8402799 [gefunden am 2019-03-06]
- Andr? Sch?n ET AL: "Comparison of the most efficient DC-DC converters for power conversion in HVDC grids", PCIM Europe 2015, Nuremberg, Germany, 6. Juli 2015 (2015-07-06), Seiten 518-526, XP055368833, Berlin ISBN: 978-3-8007-3924-0 Gefunden im Internet: URL:http://ieeexplore.ieee.org/ielx7/71488 16/7148817/07149072.pdf?tp=&arnumber=71490 72&isnumber=7148817 [gefunden am 2017-05-03]

## Beschreibung

Die Erfindung betrifft eine Einrichtung, die gemäß dem Oberbegriff des Anspruchs 1 eine hohe Gleichspannung in eine niedrigere Gleichspannung übersetzt, und umgekehrt.

Einrichtungen zum Übersetzen einer hohen Gleichspannung in eine deutlich niedrigere Gleichspannung und umgekehrt sind als Hoch- und Tiefsetzsteller bekannt. Die Eingangsanschlüsse der Einrichtung sind beispielsweise mit einem elektrischen Energienetz verbunden, welches eine hohe Gleichspannung bereitstellt und die Einrichtung mit einem Gleichstrom versorgt. An die Ausgangsanschlüsse der Einrichtung sind entweder eine Gleichstromlast oder speziell ein Gleichstromnetz angeschlossen.

Eine solche Einrichtung ist beispielsweise aus der WO 2014056540 A1 bekannt, die einen Gesamtstromrichter aufweist, der aus zwei in Reihe geschalteten modularen Mehrstufenstromrichtern (Teilumrichter) gebildet ist, die jeweils mehrere Phasenmodule aufweisen, welche aus mehreren elektrisch in Reihe geschalteten zweipoligen Sub-Modulen gebildet sind. Die Sub-Module weisen mehrere Halbleiterschalter und einen Kondensator als Energiespeicher auf. An dem Kondensator liegt eine Zwischenkreisspannung an. Eine Ansteuereinheit steuert die Mehrstufenstromrichter mittels entsprechender Ansteuersignale.

Die aus der WO 2014056540 A1 bekannte Einrichtung hat jedoch den Nachteil, dass die Stromtragfähigkeit der Sub-Module bei einer großen Differenz zwischen Ein- und Ausgangsspannung nur ungenügend genutzt wird. Das kann durch den Einsatz zweier Arten von Sub-Modulen mit unterschiedlicher Stromtragfähigkeit vermieden werden, was aber beim Betrieb aufgrund verschiedener Ersatzteile und der hohen Anzahl an Submodulen ziemlich kostspielig ist. Auch verteuern sich dadurch die Anschaffungskosten für solche Einrichtungen für hohe Gleichspannungen.

Aus der Offenlegungsschrift EP 2 637 296 A1 ist ein Stromrichtersystem bekannt, welches eine Gleichspannung in eine dreiphasige Wechselspannung wandelt. Einem zweiphasigen Multilevel-Wechselrichter ist dabei ein Transformator nachgeschaltet, der die zweiphasige Wechselspannung in eine dreiphasige Wechselspannung wandelt.

Aus der Offenlegungsschrift WO 2014/071598 A1 ist eine Einrichtung zum Übersetzen einer niedrigen Gleichspannung in eine höhere Gleichspannung bekannt, die aus drei in Reihe geschalteten Teilumrichter und einem Dreiphasentransformator gebildet ist, worin ein Teilumrichter einen modularen Mehrstufenstromrichter aufweisen kann.

Die Aufgabe der Erfindung ist es, eine Einrichtung mit modularen Mehrstufenstromrichtern zur Übersetzung von hohen Gleichspannungen mit einer geringeren Anzahl an Submodulen zu erzielen.

Die Aufgabe wird durch die Merkmale des Anspruchs 1 gelöst; die Unteransprüche stellen vorteilhafte Ausgestaltungen dar. Die Lösung sieht bezogen auf die Einrichtung vor, dass der erste Mehrstufenstromrichter die erste Gleichspannung in eine dreiphasige erste Wechselspannung überführt, dass ein erster Transformator (Dreiphasen- auf Einphasen-Transformator), der eine erste Wicklung und eine zweite Wicklung aufweist und der die an der ersten Wicklung anliegende dreiphasige erste Wechselspannung in eine an der zweiten Wicklung anliegende einphasige zweite Wechselspannung transformiert, und dass der erste Mehrstufenstromrichter an die erste Wechselspannung und der zweite Mehrstufenstromrichter an die zweite Wechselspannung angeschlossenen sind.

Vorteilhafterweise ist der als Dreiphasen-auf-Einphasen-Transformator ausgebildete erste Transformator aus mehreren Einphasen-auf-Einphasen-Transformatoren gebildet.

Schaltungstechnisch vorteilhaft ist es, wenn die Einphasen-auf-Einphasen-Transformatoren in Scott-Schaltung oder LeBlanc-Schaltung zusammengeschaltet sind.

Die Übersetzung ist dadurch verbessert, dass gemäß Anspruch 1 die Reihenschaltung der Mehrstufenstromrichter einen dritten Mehrstufenstromrichter aufweist.

Gemäß einer ersten Alternative des Anspruchs 1 weist der erste Transformator eine dritte Wicklung auf, welche die dreiphasige erste Wechselspannung in eine einphasige dritte Wechselspannung transformiert, an die der dritte Mehrstufenstromrichter angeschlossenen ist.

Gemäß einer zweiten Alternative des Anspruchs 1 ist ein zweiter Transformator (Dreiphasen- auf Einphasen-Transformator) vorhanden, der eine erste Wicklung und eine zweite Wicklung aufweist und der die an der ersten Wicklung (des zweiten Transformators) anliegende dreiphasige erste Wechselspannung in eine an der zweiten Wicklung (des zweiten Transformators) anliegende einphasige zweite Wechselspannung transformiert, an die der dritte Mehrstufenstromrichter angeschlossenen ist.

Eine einfache Zusammenschaltung liegt vor, wenn die Einphasen-auf-Einphasen-Transformatoren in Scott-Schaltung verbunden sind.

Um ein sehr hohes Übersetzungsverhältnis zwischen den beiden Gleichspannungen zu erreichen, wird vorgeschlagen, dass mehrere Drei- auf Einphasentrafos parallel geschaltet werden.

Die Erfindung wird nachfolgend anhand eines Ausführungsbeispiels näher beschrieben. Es zeigen:
- Fig. 1: eine Anordnung mit einer Einrichtung zum Hochund Tiefsetzen von Gleichspannungen mit einem Gesamtstromrichter,
- Fig. 2: den Gesamtstromrichter gemäß Fig. 1 mit modularen Mehrstufenstromrichtern und Transformator,
- Fig. 3: einen aus zwei Einphasen-auf-Einphasen-Transformatoren gebildeten Transformator gemäß Fig. 2,
- Fig. 4: einen aus drei Einphasen-auf-Einphasen-Transformatoren gebildeten Transformator gemäß Fig. 2,
- Fig. 5: einen aus vier Phasenmodulen gebildeten Hochspannungsstromrichter,
- Fig. 6: einen aus sechs Phasenmodulen gebildeten Niederspannungsstromrichter,
- Fig. 7: Aufbau eines Phasenmoduls,
- Fig. 8: Aufbau eines Submoduls,
- Fig. 9: ein Powermodul in Vollbrückenschaltung,
- Fig. 10: ein Powermodul in Halbbrückenschaltung,
- Fig. 11: Aufbau eines Kondensatormoduls,
- Fig. 12: einen Gesamtstromrichter mit einem Transformator mit einer weiteren einphasigen Wicklung,
- Fig. 13: einen Gesamtstromrichters mit zwei parallelgeschalteten Transformatoren,
- Fig. 14: einen aus zwei Einphasen-auf-EinphasenTransformatoren gebildeten Dreiphasen-auf-Einphasen-Transformator und
- Fig. 15: zwei Dreiphasen-auf-Einphasen-Transformatoren in Scott-Schaltung.

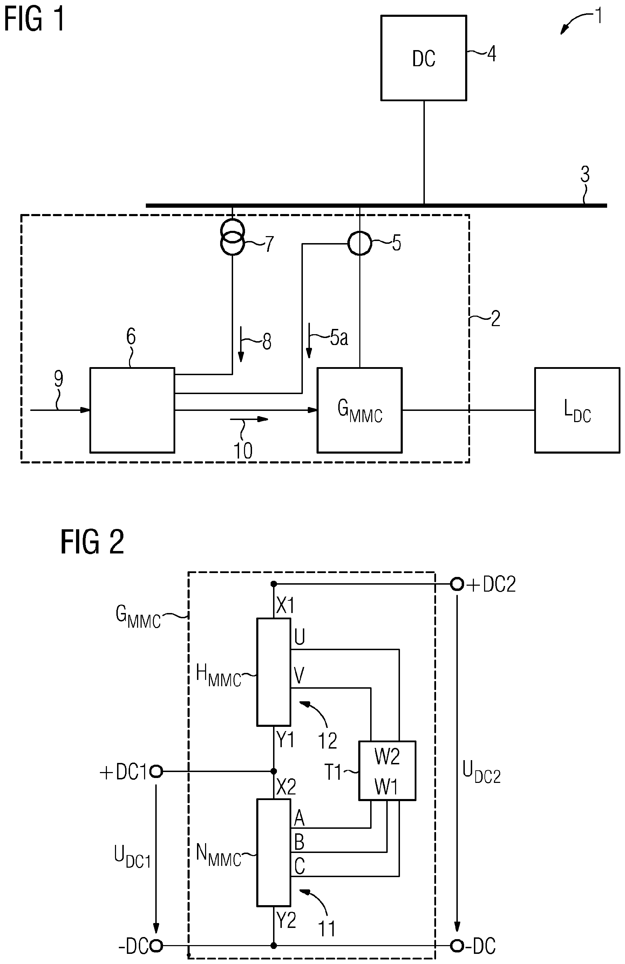

In Fig. 1 zeigt eine Anordnung 1 mit einer Einrichtung 2 zur Hoch- und Tiefsetzstellung von Gleichspannungen, die einen Gesamtstromrichter GMMC (MMC: Modular Multilevel Converter) aufweist und die hier beispielhaft zum Hochsetzstellen verwendet wird. Der Gesamtstromrichter GMMC ist über eine Anschlussschiene 3 mit einem Gleichspannungsnetz DC als Energieversorgungsnetz 4 elektrisch verbunden. Mittels eines Stromsensors 5 wird der durch den Gesamtstromrichter GMMC fließende Strom gemessen. Strommesswerte 5a werden zu einer Ansteuereinheit 6 für den Gesamtstromrichter GMMC übertragen. Weiterhin wird mittels eines Spannungssensors 7 (der hier als Messwandler ausgeführt ist) die an der Anschlussschiene 3 anliegende Anschlussspannung 8 gemessen. Die Anschlussspannung 8 liegt an dem Gesamtstromrichter GMMC an. Die Spannungsmesswerte der Anschlussspannung 8 werden jeweils zu der Ansteuereinheit 6 übertragen.

Anhand von vorgegebenen Sollwerten 9 berechnet die Ansteuereinheit 6 Ansteuersignale 10, die zum Gesamtstromrichter GMMC übertragen werden. Mittels dieser Ansteuersignale 10 wird der Gesamtstromrichter GMMC derart gesteuert, dass sich an einer Gleichspannungslast LDC die gewünschten Strom- und Spannungswerte einstellen. Bei der Gleichspannungslast LDC kann es sich speziell auch um ein weiteres Gleichspannungsnetz handeln. Die Ansteuereinheit 6 kontrolliert auf diese Weise den Gesamtstromrichter GMMC und damit die Einrichtung 2.

In Fig. 2 ist der Gesamtstromrichter GMMC dargestellt, der zwei modulare Mehrstufenstromrichter 11, 12 aufweist, hier einen Niederspannungsstromrichter NMMC als erstem Mehrstufenstromrichter 11 und einen Hochspannungsstromrichter HMMC als zweitem Mehrstufenstromrichter 12. Die beiden Mehrstufenstromrichter 11, 12 sind in Reihe geschaltet. Der Gesamtstromrichter GMMC besteht aus den Anschlüssen für die niedrige Gleichspannung +DC1 und -DC, den Anschlüssen für die hohe (hier deutlich höhere) Gleichspannung +DC2 und -DC, wobei der Anschluss -DC ein gemeinsamer Anschluss ist. Parallel zu den Anschlüssen +DC1 und -DC (hier den Eingangsanschlüssen) ist der Niederspannungsstromrichter NMMC angeschlossen. Zwischen den Anschlüssen +DC1 und -DC (hier den Ausgangsanschlüssen) ist der Hochspannungsstromrichter HMMC angeschlossen. Der Hochspannungsstromrichter HMMC und der Niederspannungsstromrichter NMMC führen einen Leistungsaustausch über einen (ersten) Transformator T1 (einen Dreiphasen-auf-Einphasen-Transformator) durch, der eine (erste) Wicklung W1 und eine (zweite) Wicklung W2 aufweist. Die an der Wicklung W1 anliegende dreiphasige Wechselspannung transformiert der Transformator T1 in eine an der Wicklung W2 anliegende einphasige Wechselspannung. Die Wicklung W1 ist an den Niederspannungsstromrichter NMMC und die Wicklung W2 ist an den Hochspannungsstromrichter HMMC angeschlossenen.

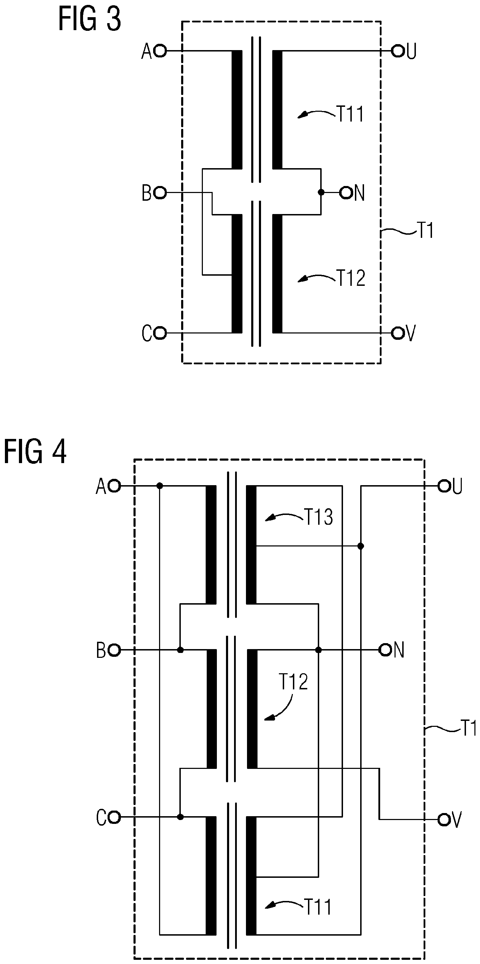

Fig. 3 zeigt den Transformator T1, der hier jeweils aus mehreren Einphasen-auf-Einphasen-Transformatoren T11, T12 gebildet ist. In Fig. 3 ist der erste Transformator T1 aus zwei in Scott-Schaltung zusammengeschalteten Einphasen-auf-Einphasen-Transformatoren T11, T12 gebildet. Die beiden einphasigen Ausgänge U, V sind dabei über einen Anschlusspunkt N gekoppelt.

Fig. 4 zeigt den Transformator T1, der hier ebenfalls jeweils aus mehreren Einphasen-auf-Einphasen-Transformatoren T11, T12, T13 gebildet ist. Im Unterschied zu Fig. 3 sind hier drei Einphasen-auf-Einphasen-Transformatoren T11, T12, T13 in LeBlanc-Schaltung miteinander verbunden. Die beiden einphasigen Ausgänge U, V sind ebenfalls durch einen Anschlusspunkt N gekoppelt.

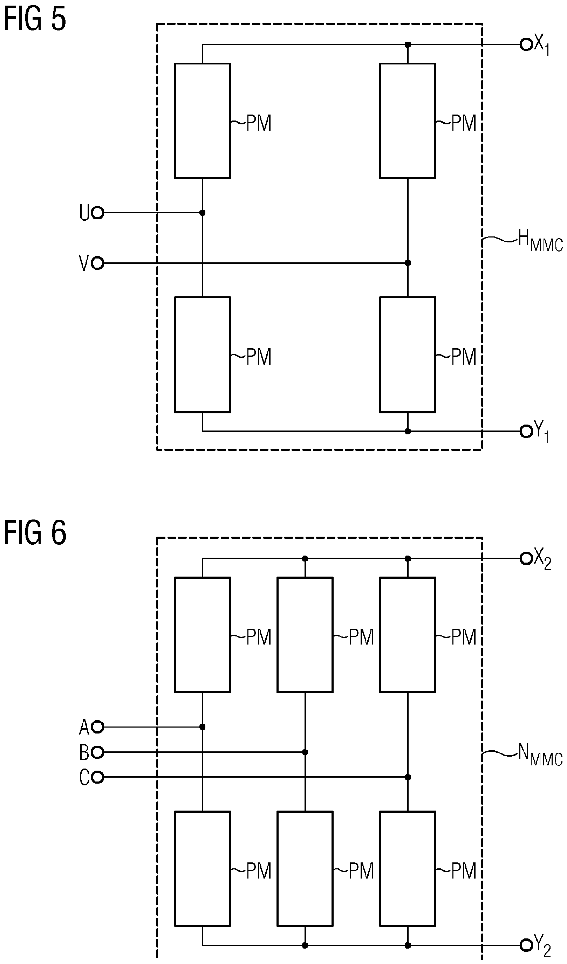

In Fig. 5 ist der Hochspannungsstromrichter HMMC dargestellt, der hier vier Phasenmodule PM, zwei einphasige Wechselspannungsanschlüsse U und V sowie zwei Gleichspannungsanschlüsse X1 und Y1 aufweist.

In Fig. 6 ist der Niederspannungsstromrichter NMMC aus sechs Phasenmodulen PM, den dreiphasigen Wechselspannungsanschlüssen A, B und C sowie den Gleichspannungsanschlüssen X2 und Y2 gebildet.

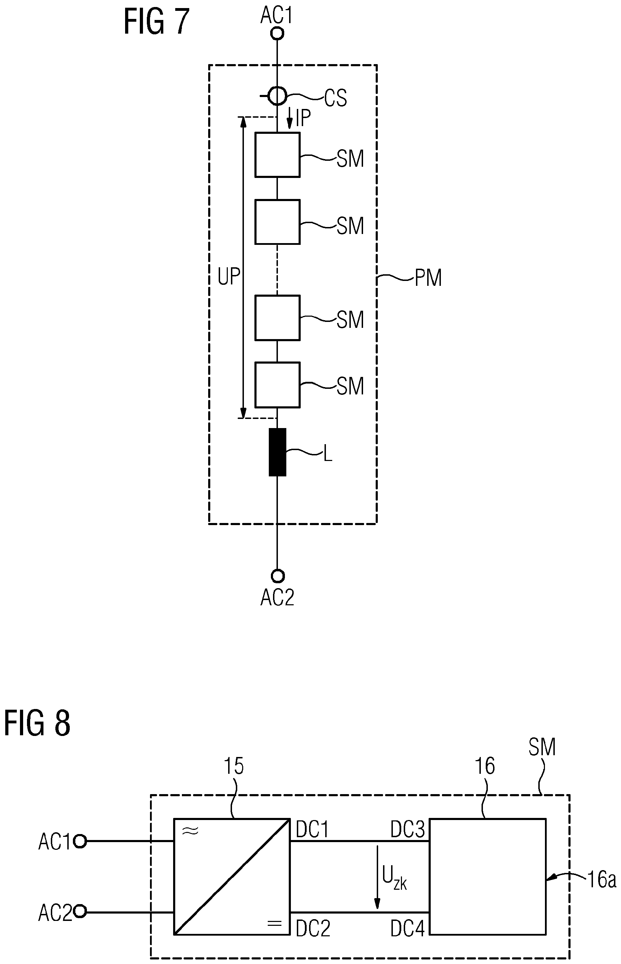

In Fig. 7 ist der Aufbau eines Phasenmoduls PM mit Wechselspannungsanschlüssen AC1 und AC2 gezeigt, das aus einer Koppelinduktivität L und einer Vielzahl in Reihe geschalteter Submodule SM gebildet ist. Der Strom durch das Phasenmodul PM wird mittels eines Stromsensors CS gemessen.

Fig. 8 zeigt eine schematische Schaltung eines Submoduls SM, das aus einem Powermodul 15 besteht, an dessen Zwischenkreis mit den Gleichspannungen DC1, DC2 und DC3, DC4 und damit der Zwischenkreisspannung Uzk ein Kondensatormodul 16 als Energiespeicher 16a angeschlossen ist.

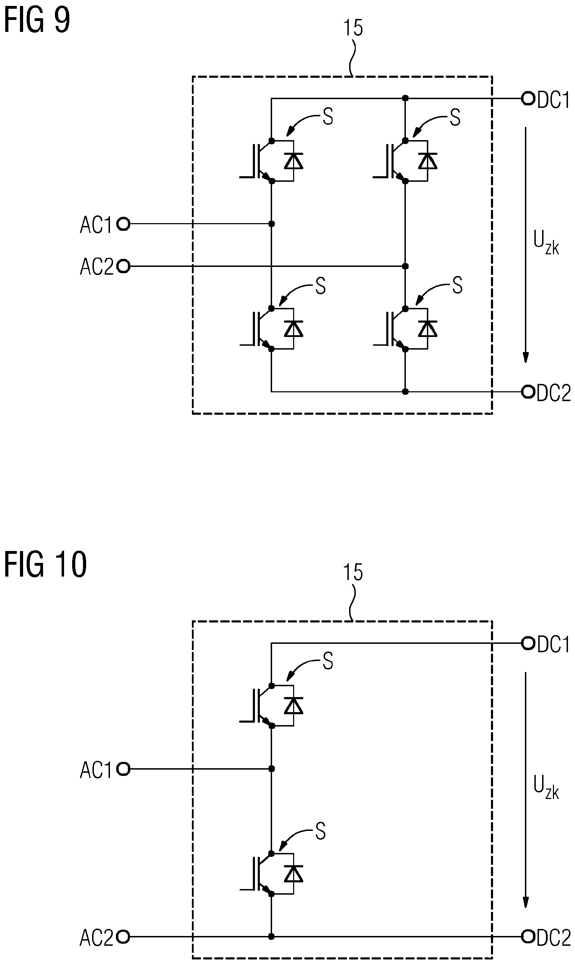

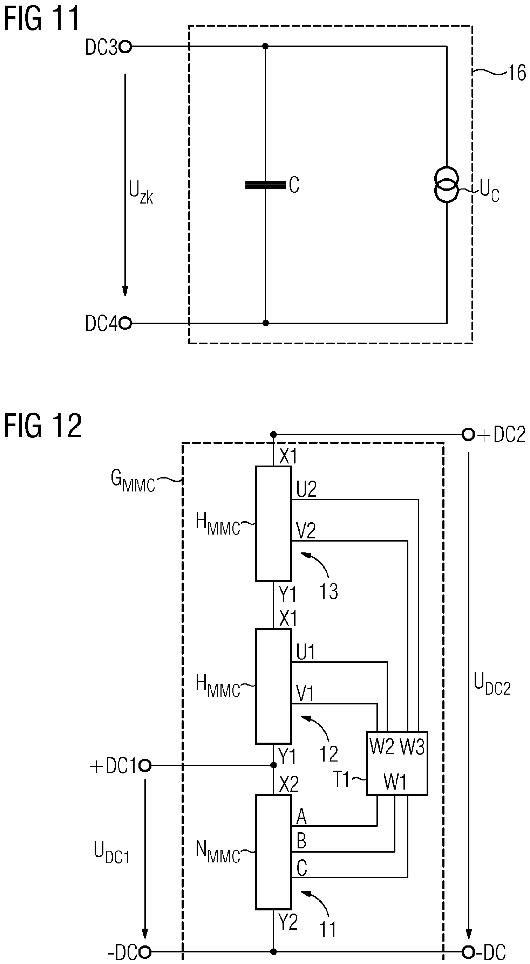

In Fig. 9 ist der Aufbau eines Powermoduls 15 gezeigt, das vier von der Steuereinrichtung 6 gesteuerte Halbleiterschalter S aufweist, welche als Vollbrücke geschaltet sind. Geeignete Halbleiterschalter S sind z.B. IGBT (Bipolar-Transistoren mit isolierter Gate-Elektrode), IGCT, IEGT oder MOSFETs. Fig. 10 zeigt ein Powermodul 15 in Halbbrückenausführung (14b), das aus zwei Halbleiterschaltern besteht. Geeignete Halbleiterschalter S sind z.B. IGBT, IGCT, IEGT oder MOSFETs. Fig. 11 zeigt den Aufbau des Kondensatormoduls 16, das aus einer Kondensatorspannungsmessung Uc und einem Kondensator C besteht, der die Zwischenkreisspannung Uzk puffert.

In Fig. 12 eine weitere Ausführung eines Gesamtstromrichters GMMC gemäß der ersten Oder-Alternative des Anspruchs 1 dargestellt, bei welcher der (erste) Transformator T1 eine weitere einphasige (dritte) Wicklung W3 aufweist, welche die dreiphasige Wechselspannung in eine einphasige (dritte) Wechselspannung transformiert, die hier an einen weiteren (zweiten) Hochspannungsstromrichter HMMC (dritten Mehrstufenstromrichter 13) angeschlossenen ist. Es sind hier also mehrere, in Reihe geschaltete Mehrstufenstromrichter 11, 12, 13 vorhanden, welche über einen Dreiphasen-auf-Einphasen-Transformator T1 mit mehreren Abgängen mit dem Niederspannungsstromrichter NMMC gekoppelt sind.

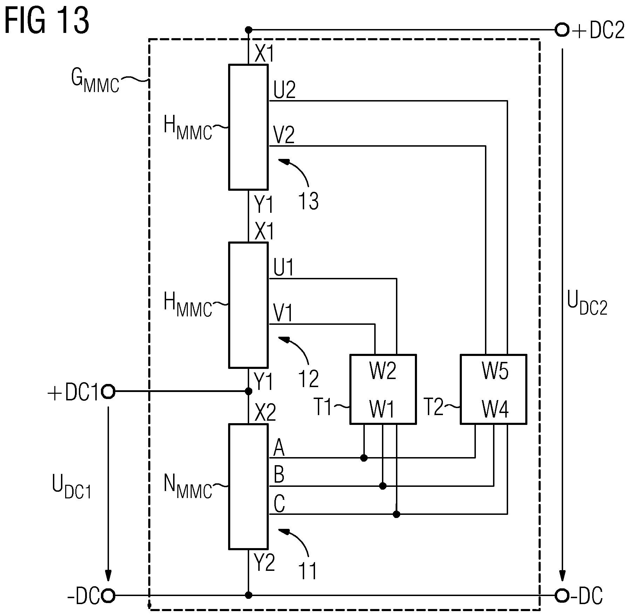

In Fig. 13 ist eine weitere Ausführung eines Gesamtstromrichters GMMC gemäß der zweiten Oder-Alternative des Anspruchs dargestellt, bei welchem wie in Fig. 12 drei Mehrstufenstromrichter 11, 12, 13 in Reihe geschaltet sind, hier wieder ein Niederspannungsstromrichter NMMC und zwei Hochspannungsstromrichter HMMC. Die Hochspannungsstromrichter HMMC sind über parallelgeschaltete einzelne Dreiphasen-auf-Einphasen-Transformatoren T1, T2 mit dem Niederspannungsstromrichter NMMC gekoppelt.

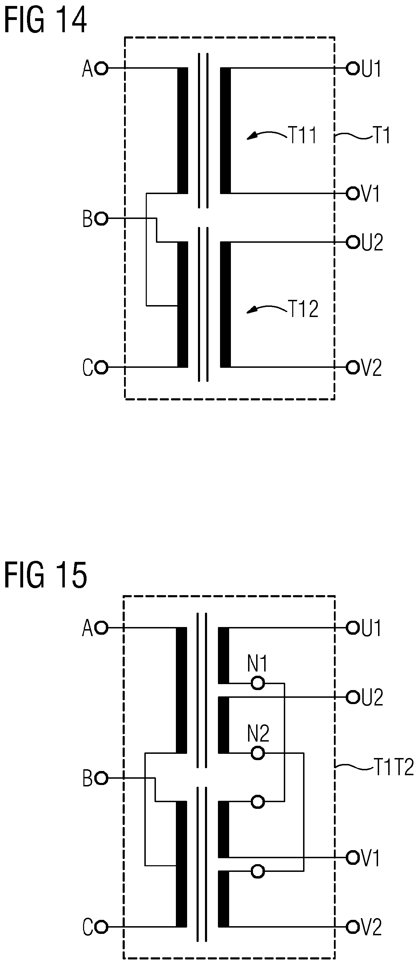

Fig. 14 zeigt eine aus Einphasen-auf-Einphasen-Transformatoren T11, T12 gebildete Ausführung des Dreiphasen-auf-Einphasen-Transformators T1 mit mehreren Abgängen. Bei der Ausführung in Fig. 14 wird die Scott-Schaltung mit zwei einphasigen Ausgängen verwendet.

Die Ausführung in Fig. 15 zeigt die Dreiphasen-auf-Einphasen-Transformatoren T1, T2 als Transformator T1T2 in Scott-Schaltung mit mehreren (hier vier) Ausgangswicklungen.

In einer weiteren besonderen Ausführung wird eine hochfrequente Wechselspannung (100 bis 300 Hz) an den Transformatoren T1, T2, T1T2 übersetzt.

In einer weiteren Ausführung können mehrere Dreiphasen-auf-Einphasen-Transformatoren T1 parallel geschaltet sein, wenn ein sehr hohes Übersetzungsverhältnis zwischen den beiden Gleichspannungen der Einrichtung 2 erforderlich ist.

Die Einrichtung 2 arbeitet als Hochsetzsteller, kann aber auch als Tiefsetzsteller eingesetzt werden, wenn der Energiefluss in umgekehrter Richtung verläuft (bezogen auf Fig. 2 von rechts nach links) und eine niedrigere Gleichspannung in eine höhere Gleichspannung übersetzt wird.

## Patentansprüche

1. Einrichtung (2), die eine erste Gleichspannung (U_{DC1}) in eine höhere zweite Gleichspannung (U_{DC2}) übersetzt, oder umgekehrt,
mit einem Gesamtstromrichter (GMMC), der einen ersten und einen zweiten modularen Mehrstufenstromrichter (11, 12) aufweist, die gleichspannungsseitig in Reihe geschaltet sind, wobei der erste modulare Mehrstufenstromrichter (11) gleichspannungsseitig mit dem zweiten modularen Mehrstufenstromrichter (12) verbunden ist,
wobei die erste Gleichspannung (U_{DC1}) an dem ersten Mehrstufenstromrichter (11) anliegt, und mit einer Ansteuereinheit (6), welche Ansteuersignale (10) zur Steuerung der Mehrstufenstromrichter (11, 12) generiert, wobei der erste Mehrstufenstromrichter (11) die erste Gleichspannung in eine dreiphasige erste Wechselspannung überführt,
wobei der Gesamtstromrichter (GMMC) einen ersten Transformator (T1) mit einer ersten Wicklung (W1) und einer zweiten Wicklung (W2) aufweist,
**dadurch gekennzeichnet,**
**dass** der erste Transformator (T1) die an der ersten Wicklung (W1) anliegende dreiphasige erste Wechselspannung in eine an der zweiten Wicklung (W2) anliegende einphasige zweite Wechselspannung transformiert,
**dass** der erste Mehrstufenstromrichter (11) an die erste Wechselspannung und der zweite Mehrstufenstromrichter (12) an die zweite Wechselspannung angeschlossenen sind,
**dass** die Reihenschaltung der Mehrstufenstromrichter einen dritten Mehrstufenstromrichter (13) aufweist,
der gleichspannungsseitig mit dem zweiten Mehrstufenstromrichter (12) verbunden ist, wobei die zweite Gleichspannung (U_{DC2}) an der Reihenschaltung der Mehrstufenstromrichter (11, 12, 13) anliegt,
und
**dass** der erste Transformator (T1) eine dritte Wicklung (W3) aufweist, welche die dreiphasige erste Wechselspannung in eine einphasige dritte Wechselspannung transformiert, an die der dritte Mehrstufenstromrichter (13) angeschlossenen ist, oder
**dass** der Gesamtstromrichter (GMMC) einen zweiten Transformator (T2) aufweist, der
eine erste Wicklung (W4) und eine zweite Wicklung (W5) aufweist und der die an der ersten Wicklung (W4) anliegende dreiphasige erste Wechselspannung in eine an der zweiten Wicklung (W5) anliegende einphasige zweite Wechselspannung transformiert, an die der dritte Mehrstufenstromrichter (13) angeschlossenen ist.

2. Einrichtung nach Anspruch 1,
**dadurch gekennzeichnet,**
**dass** der als Dreiphasen-auf-Einphasen-Transformator ausgebildete erste Transformator (T1) aus mehreren Einphasen-auf-Einphasen-Transformatoren (T11, T12, T13) gebildet ist.

3. Einrichtung nach Anspruch 2,
**dadurch gekennzeichnet,**
**dass** die Einphasen-auf-Einphasen-Transformatoren (T11, T12, T13) in LeBlanc-Schaltung zusammengeschaltet sind.

4. Einrichtung nach Anspruch 2,
**dadurch gekennzeichnet,**
**dass** die Einphasen-auf-Einphasen-Transformatoren (T11, T12, T13) in Scott-Schaltung zusammengeschaltet sind.

## Claims

1. Device (2) which transforms a first DC voltage (U_{DC1}) into a higher second DC voltage (U_{DC2}), or vice versa,
having an overall converter (GMMC) which has a first and a second modular multilevel converter (11, 12) connected in series on the DC side,
wherein the first modular multilevel converter (11) is connected to the second modular multilevel converter (12) on the DC side,
wherein the first DC voltage (U_{DC1}) is applied to the first multilevel converter (11), and
having an actuation unit (6) which generates actuation signals (10) for controlling the multilevel converters (11, 12), wherein the first multilevel converter (11) converts the first DC voltage into a three-phase first AC voltage,
wherein the overall converter (GMMC) has a first transformer (T1) having a first winding (W1) and a second winding (W2),
**characterized**
**in that** the first transformer (T1) transforms the three-phase first AC voltage applied to the first winding (W1) into a single-phase second AC voltage applied to the second winding (W2),
**in that** the first multilevel converter (11) is connected to the first AC voltage and the second multilevel converter (12) is connected to the second AC voltage,
**in that** the series connection comprising the multilevel converters has a third multilevel converter (13) which is connected to the second multilevel converter (12) on the DC side, wherein the second DC voltage (U_{DC2}) is applied to the series connection comprising the multilevel converters (11, 12, 13), and
**in that** the first transformer (T1) has a third winding (W3) which transforms the three-phase first AC voltage into a single-phase third AC voltage to which the third multilevel converter (13) is connected, or
**in that** the overall converter (GMMC) has a second transformer (T2) which has a first winding (W4) and a second winding (W5) and which transforms the three-phase first AC voltage applied to the first winding (W4) into a single-phase second AC voltage which is applied to the second winding (W5) and to which the third multilevel converter (13) is connected.

2. Device according to Claim 1,
**characterized**
**in that** the first transformer (T1) designed as a three-phase to single-phase transformer is formed of a plurality of single-phase to single-phase transformers (T11, T12, T13).

3. Device according to Claim 2,
**characterized**
**in that** the single-phase to single-phase transformers (T11, T12, T13) are connected together in a Le Blanc connection.

4. Device according to Claim 2,
**characterized**
**in that** the single-phase to single-phase transformers (T11, T12, T13) are connected together in a Scott connection.

## Revendications

1. Dispositif (2), qui transforme une première tension (U_{DCL}) continue en une deuxième tension (U_{DC2}) continue plus haute, ou inversement,
comprenant un convertisseur (GMMC) d'ensemble, qui a un premier et un deuxième convertisseurs (11, 12) modulaires à plusieurs étages, qui sont montés en série du côté de la tension continue, dans lequel le premier convertisseur (11) modulaire à plusieurs étages est connecté du côté de la tension continue au deuxième convertisseur (12) modulaire à plusieurs étages,
dans lequel la première tension (U_{DC1}) continue s'applique au premier convertisseur (11) à plusieurs étages, et comprenant une unité (6) de commande, qui produit des signaux (10) de commande pour la commande des convertisseurs (11, 12) à plusieurs étages, dans lequel le premier convertisseur (11) à plusieurs étages transforme la première tension continue en une première tension alternative triphasée, dans lequel le convertisseur (GMMC) d'ensemble a un premier transformateur (T1) ayant un premier enroulement (W1) et un deuxième enroulement (W2),
**caractérisé**
**en ce que** le premier transformateur (T1) transforme la première tension alternative triphasée s'appliquant au premier enroulement (W1) en une deuxième tension alternative monophasée s'appliquant au deuxième enroulement (W2),
**en ce que** la premier convertisseur (11) à plusieurs étages est raccordé à la première tension alternative et le deuxième convertisseur (12) à plusieurs étages est raccordé à la deuxième tension alternative,
**en ce que** le circuit série des convertisseurs à plusieurs étages a un troisième convertisseur (13) à plusieurs étages, qui est connecté du côté de la tension continue au deuxième convertisseur (12) à plusieurs étages, dans lequel la deuxième tension (U_{DC2}) continue s'applique au circuit série des convertisseurs (11, 12, 13) à plusieurs étages, et
**en ce que** le premier transformateur (T1) a un troisième enroulement (W3), qui transforme la première tension alternative triphasée en une troisième tension alternative monophasée, auquel le troisième convertisseur (13) à plusieurs étages est connecté, ou
**en ce que** le convertisseur (GMMC) d'ensemble a un deuxième transformateur (T2), qui a un premier enroulement (W4) et un deuxième enroulement (W5) et qui transforme la première tension alternative triphasée s'appliquant au premier enroulement (W4) en une deuxième tension alternative monophasée s'appliquant au deuxième enroulement (W5), auxquels le troisième convertisseur (13) à plusieurs étages est connecté.

2. Dispositif suivant la revendication 1,
**caractérisé**
**en ce que** le premier transformateur (T1) constitué en transformateur trois phases à une phase est formé de plus transformateurs (T11, T12, T13) une phase à une phase.

3. Dispositif suivant la revendication 2,
**caractérisé**
**en ce que** les transformateurs (T11, T12, T13) une phase à une phase sont montés ensemble en un circuit Leblanc.

4. Dispositif suivant la revendication 2,
**caractérisé**
**en ce que** les transformateurs (T11, T12, T13) une phase à une phase sont montés ensemble en un circuit Scott.
